# EUROPÄISCHE PATENTSCHRIFT

(11) **EP 3 000 185 B1**
(45) Veröffentlichungstag und Bekanntmachung des Hinweises auf die Patenterteilung: **03.07.2019**
(21) Anmeldenummer: 14729612.3
(22) Anmeldetag: 21.05.2014
(51) Int. Cl.: H04B 3/54

(54) **VERFAHREN UND SYSTEM ZUR ÜBERTRAGUNG VON DATEN ÜBER GLEICHSTROMLEITUNGEN**
METHOD AND SYSTEM FOR TRANSMITTING DATA VIA DIRECT CURRENT LINES
PROCÉDÉ ET SYSTÈME DE TRANSMISSION DE DONNÉES PAR DES LIGNES À COURANT CONTINU

(30) Priorität: 22.05.2013 DE 102013105209
(43) Veröffentlichungstag der Anmeldung: 30.03.2016
(73) Patentinhaber: SMA Solar Technology AG, 34266 Niestetal (DE)
(72) Erfinder: BEHRENDS, Holger, 26817 Rhauderfehn (DE)
(74) Vertreter: Lahnor, Peter
(86) Internationale Anmeldenummer: PCT/EP2014/060433
(87) Internationale Veröffentlichungsnummer: WO 2014/187854

(56) Entgegenhaltungen:
- WO-A1-2014/095593
- WO-A2-2011/085952
- FR-A1- 2 870 061
- US-A1- 2008 043 992
- US-B1- 8 811 529

## Beschreibung

Die Erfindung betrifft ein System zur Übertragung von Daten über Gleichstromleitungen zur Energieübertragung, umfassend mindestens eine erste und eine zweite Kommunikationseinheit, von denen jede ein Koppelmittel zur Einkopplung von Hochfrequenzsignalen auf die Gleichstromleitungen und/oder ein Auskoppelmittel zur Auskopplung von HF-Signalen von den Gleichstromleitungen aufweist. Die Erfindung betrifft weiterhin ein Verfahren zur Übertragung von Daten über Gleichstromleitungen zur Energieübertragung und eine Photovoltaik-Anlage mit einem derartigen System.

In Photovoltaik (PV)-Anlagen sind die stromerzeugenden PV-Generatoren über häufig durchaus lange Gleichstromleitungen mit einem oder mehreren entfernt montierten Wechselrichtern verbunden. Dabei sind häufig generatornahe Einrichtungen wie Schutzeinrichtungen oder Messeinrichtungen vorgesehen, die mit dem Wechselrichter oder anderen wechselrichternah installierten Steuergeräten kommunizieren. Neben konventionellen kabelgebundenen Kommunikationsmethoden über separate Signalleitungen oder serielle und/oder parallele Bus- oder Netzwerkverbindungen oder Funkverbindungen kann eine Kommunikation auch über die Gleichstromleitungen, mit denen der PV-Generator mit dem Wechselrichter verbunden ist, erfolgen. Eine derartige Kommunikation zur Datenübertragung über Leitungen zur Energieübertragung ist auch als Powerline-Communication (PLC) bekannt. Dabei wird das Kommunikationssignal als ein HF-Signal auf die Leitungen zur Energieübertragung eingekoppelt und empfangsseitig durch entsprechende Auskoppelmittel wieder ausgekoppelt und analysiert.

Eine weitere Verwendung von Hochfrequenzsignalen in PV-Anlagen ist in den Druckschriften DE 10 2010 036 514 A1 und WO 2012/000533 A1 beschrieben. Es wird ein in eine Photovoltaikanlage eingespeistes Hochfrequenzsignal an anderer Stelle wieder ausgekoppelt und ausgewertet. Beispielsweise wird die ausgekoppelte Signalantwort mit Referenzdaten verglichen, die während eines fehlerfreien Normalbetriebes der Photovoltaikanlage aufgenommen wurden. Auf Basis der Auswertung der Signalantwort wird auf Ereignisse geschlossen, die den Betrieb des PV-Generators beeinträchtigen. Solche Ereignisse sind beispielsweise ein Diebstahl eines oder mehrerer PV-Module oder aufgetretene Kontaktprobleme.

Aus der Druckschrift DE 199 40 544 A1 ist eine Schaltungsanordnung zur Einkopplung eines HF-Signals zur Datenübertragung auf ein Wechselstrom-Niederspannungsnetz, wie es eine typische Elektro-Hausinstallation darstellt, offenbart. Einem Ausgangsverstärker für das Sendesignal ist dabei ein Netzwerk zur Impedanzanpassung an einen Übertrager nachgeschaltet, wobei der Übertrager das Signal auf die Wechselstromleitungen der Hausinstallation überträgt. Die Schaltungsanordnung weist eine Regeleinrichtung auf, die anhand einer Strommessung innerhalb des Übertragungsnetzwerks die Spannungsamplitude des HF-Signals am Eingang des Übertragungsnetzwerks derart über den Ausgangsverstärker variiert, dass das HF-Signal auf den Wechselstromleitungen der Hausinstallation eine konstante Spannungsamplitude vorgegebener Höhe aufweist. Innerhalb der Hausinstallation sind Empfänger für das HF-Signal im Wesentlichen parallel zu Verbrauchern angeordnet. Die konstante Spannungsamplitude stellt sicher, dass ein gleichermaßen starkes Signal an jeder von ggf. mehreren parallel geschalteten Empfangseinheiten empfangen wird. Für den gleichen Verwendungszweck innerhalb eines Haushaltsnetzwerk mit unbekannter Impedanz offenbart auch die Druckschrift US 2008 / 0043992 A1 ein System zur Anpassung der Signalstärke für eine Datenübertragung. In beiden Schriften werden Testsignal und Datensignal von der gleichen Komponente ausgesandt.

Die Schrift FR 2870061 A1 offenbart ein Verfahren zur Übertragung von Daten von einem Modul A an ein Modul B. Bei dem Verfahren wird ein Vorwärtssignal von dem Modul A an das Modul B gesendet. Das Modul B misst eine Empfangsamplitude des Vorwärtssignals und vergleicht diese mit einem vorbestimmten Schwellenwert. Eine Übertragungsamplitude des Moduls A wird entsprechend dem Vergleich schrittweise geändert. Dabei wird die schrittweise Änderung der Übertragungsamplitude des Moduls A durch das Modul B gesteuert, indem das Modul B Steueranweisungen an das Modul A sendet.

In PV-Anlagen weist der PV-Generator üblicherweise eine oder mehrere Reihenschaltungen einer Mehrzahl von PV-Modulen, einen sogenannten String, auf. Oft bilden mehrere solcher Strings, die untereinander parallel geschaltet werden, den PV-Generator. Empfänger für Daten, die über ein HF-Signal auf den Gleichstromleitungen, ausgehend von einem Wechselrichter oder einer zentralen Steuereinrichtung, gesendet werden, sind unter Umständen auf der Ebene einzelner PV-Module vorhanden. Auch eine umgekehrte Datenübertragung von einem im String angeordneten Sender zu einem wechselrichternah positionierten Empfänger ist gebräuchlich. Nachfolgend werden Sende- und/oder Empfangseinrichtungen als Kommunikationseinheiten bezeichnet. Diese können sowohl für eine unidirektionale als auch eine bidirektionale Datenübertragung eingerichtet sein.

Bedingt durch die Reihenschaltung der PV-Module innerhalb eines Strings und die Parallelschaltung zweier oder mehrerer Strings ist die an einem einzelnen PV-Modul auskoppelbare Signalstärke bei bekannten Schaltungsanordnungen zur Einkopplung des HF-Signals häufig gering und zudem auch bei bekannter Sendesignalstärke nicht a priori bekannt. Dies wird im Folgenden exemplarisch für den Fall einer Kommunikation vom Wechselrichter in Richtung der PV-Module unter Berücksichtigung einer induktiven Ein- und Auskopplung der HF-Signale näher erläutert. Bei einer induktiven Auskopplung resultiert die Signalstärke des ausgekoppelten HF-Signales aus der Stromstärke dieses Signales am Ort des Empfängers (hier: den PV-Modulen). Wird nun beim Senden das HF-Signal am Ort des Wechselrichters beispielsweise mit einer konstant vorgegebenen Spannungsamplitude auf die Gleichstromleitungen eingekoppelt, so stellt sich je nach Impedanz innerhalb des Gleichstromkreises eine entsprechende Stromstärke des HF-Signales ein. Die Signalstärke des ausgekoppelten HF-Signales ist damit abhängig von der Impedanz in diesem Gleichstromkreis und somit im Allgemeinen unterschiedlich für verschiedene PV-Anlagen. Wird hingegen beim Senden das HF-Signal derart auf die Gleichstromleitungen eingekoppelt, dass es am Ort der Einkopplung eine vorgegebene Stromamplitude aufweist, so ist bei einem unverzweigten Gleichstromkreis auch eine vordefinierte Signalstärke des ausgekoppelten HF-Signales am Ort der PV-Module gewährleistet. Dies ist allerdings nicht mehr der Fall, sofern der Gleichstromkreis eines PV-Generators Verzweigungen, beispielsweise in Form mehrerer parallel geschalteter Strings aufweist. In diesem Fall teilt sich die Stromstärke des am Ort des Wechselrichters eingekoppelten HF-Signales an den Verzweigungspunkten, abhängig von den Impedanzen der einzelnen Strings, auf diese Strings auf. Hieraus resultiert eine an einem einzelnen PV-Modul auskoppelbare Signalstärke, die im Allgemeinen gering und a priori unbekannt ist, wodurch die Powerline-Communication signifikant erschwert, schlimmstenfalls sogar verhindert wird.

Unter Berücksichtigung der obigen Betrachtung sind hinsichtlich einer robust funktionierenden Powerline-Communication die anspruchsvollsten Rahmenbedingungen einer PV-Anlage mit mehreren untereinander parallel geschalteten Strings zugrunde zu legen. Bei einer entsprechenden PV-Anlage wird der Gleichstromkreis von verschiedenen Zweigen des PV-Generators, den Gleichstromleitungen und der Eingangsstufe des Wechselrichters gebildet. Maßgeblich für die Systemimpedanz sind dabei die Leitungslängen und die Leitungsverlegung, die u.a. von der Beleuchtungssituation und der Anzahl der in Serie geschalteten PV-Module abhängigen Impedanzen der verschiedenen Strings, sowie ferner unter Umständen die Eingangsimpedanz des Wechselrichters. Im Unterschied zu dem Wechselstrom-Niederspannungsnetz der Hausinstallation, in dem die Systemimpedanz in der Regel gering und auch nahezu konstant ist, können im Gleichstromkreis der PV-Anlage deutlich höhere und stark variierende Impedanzen auftreten. Diese Impedanzen variieren nicht nur von PV-Anlage zu PV-Anlage, sondern auch innerhalb einer bestimmten PV-Anlage als Funktion der Zeit. Auch die Art der verwendeten PV-Module, insbesondere ob es sich um Module auf der Basis von poly- oder monokristallinem Halbleitermaterial oder um sogenannte Dünnschichtmodule auf der Basis von amorphem oder mikrokristallinem Halbleitermaterial handelt, hat einen großen Einfluss auf die Impedanzen und deren Variation.

Um dennoch eine zufriedenstellend zuverlässige Powerline-Communication bei PV-Anlagen zu erzielen, wurde bisher einerseits eine möglichst hohe Signalstärke auf die Gleichstromleitungen eingekoppelt und andererseits nach Auskopplung eines empfangenen Signals dieses aufwändig verstärkt. Ein zu hoher Sendepegel ist jedoch unter Umständen nicht mehr mit EMV (elektromagnetische Verträglichkeit) -Richtlinien vereinbar. Eine bei jedem der Empfänger vorgenommene Verstärkung ist material- und damit kostenaufwändig und zudem bei hohen Verstärkungsfaktoren auch störanfällig gegenüber eingestrahlten Störsignalen, die ebenfalls verstärkt werden.

Aus der Druckschrift WO 2011/085952 A2 ist ein alternatives Verfahren zur Übertragung von Daten über Leitungen zur Energieübertragung bekannt, mit dem eine möglichst störunanfällige Übertragung erzielt wird. Dabei ist eine Initialisierungsphase vorgesehen, bei der ein Testsignal gesendet wird, das im Empfänger auf seine Signalstärke, insbesondere eine Amplitude, ausgewertet wird. Abhängig vom Ergebnis der Auswertung wird eine Wiederholungsrate ermittelt, die angibt, wie häufig die zu übertragenden Daten innerhalb eines Datentelegramms wiederholt werden. Im Empfänger werden die mehrfach empfangenen Signale zur Erhöhung des Signal-Rausch-Verhältnisses phasenrichtig aufaddiert, wodurch die robuste und störunanfällige Datenübertragung erreicht werden kann. Es wird jedoch ein komplexer Empfänger für das phasenrichtige Aufaddieren der nacheinander empfangenen Daten benötigt.

Es ist daher eine Aufgabe der vorliegenden Erfindung, ein System und ein Verfahren zur Übertragung von Daten über Gleichstromleitungen zur Energieübertragung zu schaffen, bei denen möglichst unabhängig von der Anordnung der Kommunikationseinheiten auch innerhalb eines verzweigten Gleichstromkreises, wie er beispielsweise bei parallelen Strings in einem PV-Generator vorliegt, auf einfache Weise eine gute Signalübertragung von einer sendenden Kommunikationseinheit zu einer empfangenden Kommunikationseinheit gegeben ist.

Diese Aufgabe wird durch ein System, ein Verfahren und eine PV-Anlage mit den jeweiligen Merkmalen der unabhängigen Ansprüche gelöst. Vorteilhafte Ausgestaltungen und Weiterbildungen sind Gegenstand der jeweiligen abhängigen Ansprüche.

Ein erfindungsgemäßes Verfahren zielt auf eine Übertragung von Daten über Gleichstromleitungen zur Energieübertragung von einer ersten zu einer zweiten Kommunikationseinheit in einer Photovoltaikanlage mit einem mindestens einen String aufweisenden PV-Generator, der über die Gleichstromleitungen mit einem Wechselrichter verbunden ist. Dem Wechselrichter und dem mindestens einen String ist jeweils mindestens eine der ersten und zweiten Kommunikationseinheiten zugeordnet. Das Verfahren weist die folgenden Schritte auf: Es wird ein Hochfrequenz-Testsignals mit einer vorgegebenen Spannungsamplitude durch die zweite Kommunikationseinheit erzeugt und auf die Gleichstromleitungen eingekoppelt. Daraufhin wird von der ersten Kommunikationseinheit eine Höhe eines auf den Gleichstromleitungen von dem Hochfrequenz-Testsignal hervorgerufenen Stroms erfasst. Abhängig von der Höhe des von dem Testsignal hervorgerufenen Stroms wird eine Spannungsamplitude für ein Hochfrequenzsignal bestimmt und ein solches Hochfrequenzsignal mit der zuvor bestimmten Spannungsamplitude auf die Gleichstromleitungen durch die erste Kommunikationseinheit zur Übertragung von Daten an die zweite Kommunikationseinheit eingekoppelt. Dabei wird zum Bestimmen der Spannungsamplitude für das Hochfrequenzsignal zur Übertragung der Daten aus dem von dem Testsignal hervorgerufenen Strom und der Spannungsamplitude des Testsignals eine Impedanz einer Übertragungsstrecke für das Hochfrequenzsignal auf den Gleichstromleitungen mit bekannter Impedanz der Kommunikationseinheiten und unter Annahme, dass der Wechselrichter eine vernachlässigbar kleine Impedanz aufweist, berechnet. Die Übertragungseigenschaften des die Gleichstromleitungen umfassenden Gleichstromkreises werden im Wesentlichen durch die Impedanz des Gleichstromkreises bestimmt.

Das Testsignal wird somit vor der eigentlichen Datenübertragung genutzt, um Übertragungseigenschaften des die Gleichstromleitungen umfassenden Gleichstromkreises zu ermitteln. Die nachfolgende Datenübertragung von der ersten an die zweite Kommunikationseinheit kann dann mit einer entsprechend angepassten optimalen Signalamplitude für das zur Datenübertragung verwendete Hochfrequenzsignal erfolgen. Das Verfahren zur Datenübertragung ist also zweistufig ausgebildet, wobei das Testsignal verwendet wird, um die zur Datenübertragung verwendeten Gleichstromleitungen für das zur Datenübertragung verwendete Hochfrequenzsignal auszumessen. Die auszumessende Übertragungseigenschaft des die Gleichstromleitungen umfassenden Gleichstromkreises umfasst dessen Impedanz bei den oder nahe der für die Datenübertragung relevanten Frequenzen. Das Testsignal selbst kann dabei entweder von der ersten oder von der zweiten Kommunikationseinheit abgegeben werden, wobei jedoch bevorzugt das Testsignal von der zweiten Kommunikationseinheit abgegeben wird, da in diesem Fall sichergestellt ist, dass die ermittelten Übertragungseigenschaften des Gleichstromkreises tatsächlich die Bedingungen bei einem Sendevorgang von der ersten zur zweiten Kommunikationseinheit widerspiegeln.

In einer vorteilhaften Ausgestaltung des Verfahrens wird das Testsignal wiederholt, insbesondere zyklisch, von der ersten oder zweiten Kommunikationseinheit auf die Gleichstromleitungen eingekoppelt. Auf diese Weise wird sichergestellt, dass auch bei sich ändernden Übertragungseigenschaften des Gleichstromkreises, z.B. durch sich ändernde Impedanzen des Kreises, jederzeit eine Datenübertragung mit optimaler Signalamplitude erfolgt.

In einer weiteren vorteilhaften Ausgestaltung des Verfahrens wird das Testsignal mit einer fest vorgegebenen Spannungsamplitude eingekoppelt. Alternativ kann die Spannungsamplitude von der das Testsignal aussendenden ersten oder zweiten Kommunikationseinheit variiert werden. Beispielsweise kann die Spannungsamplitude ausgehend von einem Anfangswert erhöht werden, wenn die Übertragungseigenschaften des Gleichstromkreises so sind, dass andernfalls das Testsignal nicht in zur Auswertung ausreichender Stärke empfangen werden kann, was der Sender des Testsignals anhand einer ausbleibenden Rückmeldung von dem Empfänger des Testsignals feststellen kann. Eine solche Rückmeldung kann als Reaktion auf ein empfangenes Testsignal, aber auch einer Datenübertragung vorgesehen sein.

In einer weiteren vorteilhaften Ausgestaltung des Verfahrens wird das Testsignal mit einkodierten Informationen ausgesendet, wobei die Informationen eine Kennung der das Testsignal aussendenden ersten oder zweiten Kommunikationseinheit und/oder eine Angabe der Höhe der Spannungsamplitude umfassen. Ein derartiges Testsignal mit Kennungsübertagung ermöglicht, in einem System mit mehreren Kommunikationseinheiten die Festlegung einer optimalen Signalamplitude für die Datenübertragung individuell für jede Daten empfangende Kommunikationseinheit. Die in das Testsignal einkodierte Höhe der Spannungsamplitude des Testsignals ermöglicht die Verwendung nicht fest vorgegebener Spannungsamplituden für das Testsignal.

Ein erfindungsgemäßes System der eingangs genannten Art ist in einer PV-Anlage angeordnet. Dabei umfasst die PV-Anlage einen PV-Generator, der mindestens einen String aufweist, der über Gleichstromleitungen mit einem Wechselrichter verbunden ist. Dem Wechselrichter ist die erste Kommunikationseinheit und dem mindestens einen String mindestens eine zweite Kommunikationseinheit zugeordnet. Das erfindungsgemäße System zeichnet sich dadurch aus, dass die erste oder zweite Kommunikationseinheit einen Testsignalgenerator zur Erzeugung eines Hochfrequenz-Testsignals mit vorgegebener Spannungsamplitude und die erste Kommunikationseinheit Strom-Messmittel zur Bestimmung einer Höhe eines auf den Gleichstromleitungen von dem Testsignal hervorgerufenen Stroms aufweist. Die erste Kommunikationseinheit umfasst weiter einen Signalgenerator zur Erzeugung eines Hochfrequenzsignals mit variabler Spannungsamplitude zur Übertragung von Daten an die zweite Kommunikationseinheit, sowie eine Steuereinrichtung zur Einstellung der Spannungsamplitude des Hochfrequenzsignals abhängig von der Höhe des von dem Testsignal hervorgerufenen Stroms. Ein System mit derartig ausgebildeten Kommunikationseinheiten ist zur Durchführung des zuvor beschriebenen Verfahrens geeignet. Es ergeben sich die im Zusammenhang mit dem Verfahren beschriebenen Vorteile.

In einer vorteilhaften Ausgestaltung des Systems weisen die Einkoppelmittel und/oder die Auskoppelmittel der Kommunikationseinheiten galvanisch trennende Übertrager mit mindestens zwei Wicklungen auf, von denen eine in die Gleichstromleitungen eingeschleift ist. Mit derartig im Gleichstromkreis angeordneten Übertragern kann sowohl das Testsignal, als auch das Signal zur Datenübertragung direkt ein- und/oder ausgekoppelt werden. Alternativ können auch kapazitiv arbeitende Ein- und/oder die Auskoppelmittel eingesetzt werden.

Bevorzugt weist die PV-Anlage mindestens zwei parallel geschaltete Strings auf, wobei jedem der Strings eine zweite Kommunikationseinheit zugeordnet ist.

Entsprechend betrifft die Erfindung in einem weiteren Aspekt eine PV-Anlage mit einem PV-Generator, der mindestens einen String aufweist, der über Gleichstromleitungen mit einem Wechselrichter verbunden ist, wobei die PV-Anlage ein derartiges System zur Übertragung von Daten über die Gleichstromleitungen aufweist.

Bei PV-Anlagen, bei denen die Impedanz insgesamt und innerhalb einzelner, parallel geschalteter Strings zeitlich variiert, kann das erfindungsgemäße Verfahren und System bei PV-Anlagen besonders vorteilhaft zu einer sicheren Datenübertragung zwischen Kommunikationseinheiten, die wechselrichternah bzw. innerhalb der einzelnen Strings angeordnet sind, eingesetzt werden.

Die Erfindung wird nachfolgend anhand von Ausführungsbeispielen mithilfe von Figuren näher erläutert. Die Figuren zeigen:
- Fig. 1: ein Blockschaltbild einer PV-Anlage;
- Fig. 2: ein Blockschaltbild einer Gleichstromseite einer PV-Anlage und deren Abstraktionen im Ersatzschaltbild;
- Fig. 3 u. 4: das Ersatzschaltbild der PV-Anlage gemäß Fig. 2 für unterschiedliche Sende- bzw. Empfangskonstellationen;
- Fig. 5: ein Flussdiagramm eines Verfahrens zur Übertragung von Daten über Gleichstromleitungen und
- Fig. 6 u. 7: jeweils ein Ersatzschaltbild einer Gleichstromseite einer PV-Anlage in einem weiteren Ausführungsbeispiel.

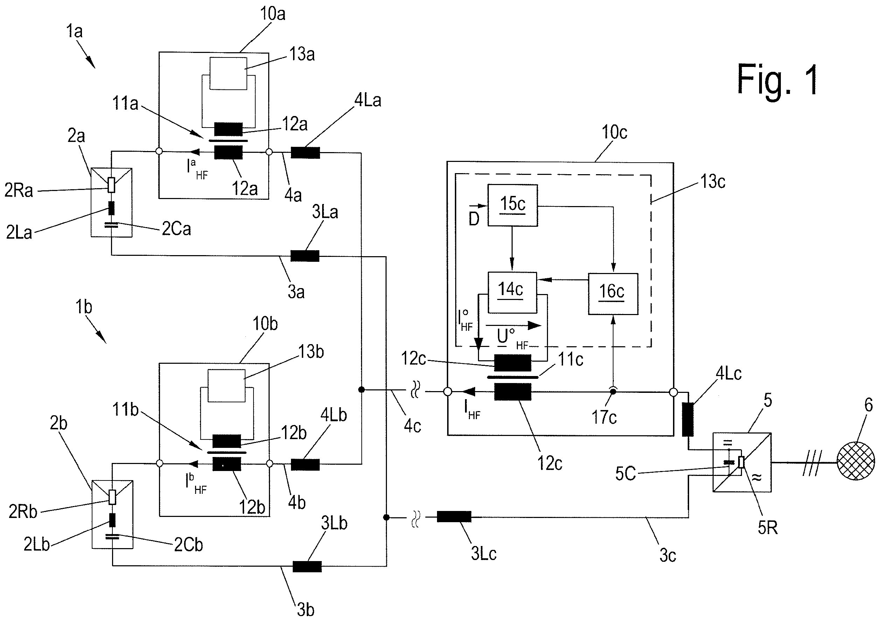

Fig. 1 zeigt eine PV-Anlage in einem ersten Ausführungsbeispiel in einem schematischen Blockschaltbild. Die PV-Anlage weist als PV-Generator zwei parallel geschaltete Strings 1a und 1b auf. Zur Unterscheidung werden im Folgenden Komponenten, die den einzelnen Strings 1a bzw. 1b zugeordnet sind, in ihrem Bezugszeichen ebenfalls durch ein hinzugefügtes "a" oder "b" gekennzeichnet. Wird ein Bezugszeichen ohne einen solchen Zusatz verwendet, so sind entweder alle Komponenten mit diesem Bezugszeichen unabhängig von ihrem Zusatz adressiert oder eine nicht näher spezifizierte dieser Komponenten mit diesem Bezugszeichen. Ein Verweis auf "String 1" bezieht sich also je nach Zusammenhang entweder allgemein auf die Strings 1a und 1b oder auf einer der Strings 1a oder 1b.

Jeder der Strings 1 weist mindestens ein PV-Modul 2 auf, das vorliegend durch das Schaltzeichen einer einzelnen PV-Zelle symbolisiert ist. Es versteht sich, dass innerhalb eines jeden Strings 1 eine Mehrzahl von hintereinander geschalteten PV-Modulen 2 vorgesehen sein kann. In das Schaltzeichen des PV-Moduls 2 ist eine Serienverschaltung eines Reihenwiderstands 2R, einer Induktivität 2L und eines Kondensators 2C eingezeichnet. Die Serienverschaltung dieser drei Elemente symbolisiert das Ersatzschaltbild des PV-Moduls 2.

Die in Fig. 1 beispielhaft dargestellten zwei Strings 1a, 1b sind über Gleichstromleitungen 3a und 4a bzw. 3b und 4b miteinander parallel geschaltet. Die Parallelschaltung der Strings 1a und 1b ist dann über gemeinsame Gleichstromleitungen 3c, 4c mit einem Gleichstromeingang eines Wechselrichters 5 verbunden. Symbolisch ist bei dem Wechselrichter 5 ein Eingangswiderstand 5R, den der Wechselrichter 5 zwischen seinen Gleichstromeingängen aufweist, und einer Eingangskapazität 5C als Ersatzschaltbild der Gleichstromseite des Wechselrichters 5 eingezeichnet. Der Wechselrichter 5 weist weiter einen Wechselstromausgang auf, über den er an ein Energieversorgungsnetz 6 angekoppelt ist.

Beispielhaft sind der Wechselstromausgang und das Energieversorgungsnetz 6 dreiphasig ausgelegt. Im Rahmen der Anmeldung kann jedoch sowohl der Wechselrichter 5 als auch das Energieversorgungsnetz 6 eine andere Anzahl von Phasen aufweisen, beispielsweise einphasig sein. Es wird angemerkt, dass in der Fig. 1 lediglich im Rahmen der Anmeldung wesentlichen Elemente der PV-Anlage gezeigt sind. So können auf der Gleich- und/oder Wechselstromseite des Wechselrichters 5 beispielsweise nicht dargestellte Schaltorgane (zum Beispiel Trennelemente, Schütze), Filter (zum Beispiel ein Sinusfilter), Netz-überwachungseinrichtungen und/oder Transformatoren vorgesehen sein.

In den Gleichstromleitungen 3, 4 sind Induktivitäten 3La, 4La, 3Lb, 4Lb und 3Lc, 4Lc eingezeichnet, die die Leitungsinduktivitäten der Gleichstromleitungen 3, 4 symbolisieren. Je nach den Eigenschaften der Gleichstromleitungen 3, 4, beispielsweise ihrer Länge, Kabelführung usw., und den betrachteten Frequenzen von übertragenen HF-Signalen können neben den Induktivitäten auch ohmsche Widerstände und Kapazitäten relevant für eine Signalübertragung sein. In diesem Sinne stehen die Induktivitäten stellvertretend für die Leitungsimpedanzen.

In jedem der Strings 1 ist eine Kommunikationseinheit 10 angeordnet. Obwohl die Erfindung nicht auf eine bidirektionale Kommunikation beschränkt ist, sondern auch für den Fall einer unidirektionalen Kommunikation, beispielsweise ausgehend von den Kommunikationseinheiten 10a, 10b innerhalb der Strings 1a, 1b in Richtung der wechselrichternahen Kommunikationseinheit 10c, angewendet werden kann, werden die weiteren Einzelheiten unter beispielhafter Verwendung von bidirektionalen Kommunikationseinheiten 10 erläutert. Aufgrund dessen werden die Kommunikationseinheiten 10 nachfolgend auch als Transceiver 10 bezeichnet. Neben den in den Strings 1a bzw. 1b angeordneten Transceivern 10a bzw. 10b ist ein weiterer Transceiver im Bereich des Wechselrichters 5 angeordnet. Dieser wird nachfolgend als Transceiver 10c bezeichnet. Hierbei kann der Transceiver 10c entweder innerhalb eines Gehäuses des Wechselrichters 5, oder aber in der näheren Umgebung des Wechselrichters 5 in einem separaten Gehäuse untergebracht sein.

Die Transceiver 10 dienen dem Austausch von Hochfrequenz (HF) -Signalen zur Datenübertragung über die Gleichstromleitungen 3, 4. Die Daten können dabei in an sich bekannter Weise auf das Hochfrequenzsignal aufmoduliert werden, beispielsweise in einem Amplituden-, Frequenz- oder Phasen-Modulationsverfahren. Jeder der Transceiver 10 weist als Ein- und/oder Auskoppelmittel einen Übertrager 11 mit zwei magnetisch gekoppelten Wicklungen 12 auf, von denen eine jeweils in eine der Gleichstromleitungen 3, 4 eingeschleift ist. In Fig. 1 sind die Übertrager beispielhaft jeweils in die Gleichstromleitungen 4 eingeschleift, konkret der Übertrager 11c des Transceivers 10c in die gemeinsame Gleichstromleitung 4 in der Nähe des Wechselrichters 5, der Übertrager 11a des Transceivers 10a in die Gleichstromleitung 4a innerhalb des Strings 1a und der Übertrager 11b des Transceivers 10b in die Gleichstromleitung 4b innerhalb des Strings 1b.

Die jeweils nicht in die Gleichstromleitung 3, 4 eingeschleifte Wicklung 12 eines der Übertrager 11 ist mit einer Ansteuer- und Auswerteschaltung 13 verbunden. Für den wechselrichternahen Transceiver 10c ist die Ansteuer- und Auswerteschaltung 13 in der Fig. 1 beispielhaft detaillierter dargestellt. Sie umfasst einen Signalgenerator 14, der von einer Datenschnittstelleneinheit 15 angesteuert wird. Die Datenschnittstelleneinheit 15 wandelt ihr zugeführte und zu übertragende (binäre) Daten D je nach gewähltem Modulationsverfahren in entsprechende Steuersignale für den Signalgenerator 14. Weiterhin ist eine Steuereinrichtung 16 vorgesehen, die mit einem Strom-Messmittel 17 verbunden ist, welches ebenfalls in die Gleichstromleitung 4 eingeschleift ist. Die Steuereinrichtung 16 wirkt auf den Signalgenerator 14 ein und kann insbesondere eine Spannungsamplitude U_{HF}⁰ eines vom Signalgenerator 14 abgegebenen HF-Signals oder eine Stromamplitude I_{HF}⁰ beeinflussen. Dieses Signal führt zu einem HF-Signal einer Spannungsamplitude u_{HF} und einer Stromamplitude I_{HF} auf den Gleichstromleitungen 3, 4.

In alternativen Ausgestaltungen des Transceivers 10 kann anstelle der hier gezeigten induktiven Einkopplung über den Übertrager 11 auch eine kapazitive Einkopplung des HF-Signals erfolgen.

Die beim Transceivers 10c dargestellten Komponenten der Ansteuer- und Auswerteschaltung 13c betreffen eine Einkopplung des HF-Signals auf die Gleichstromleitungen 4, also einen Sendevorgang. Üblicherweise sind die Transceiver 10 sowohl zum Senden als auch zum Empfang von Daten eingerichtet. Daher ist parallel zum Signalgenerator 14 eine hier nicht dargestellte Auswerteeinheit vorgesehen, die von anderen Transceivern auf die Gleichstromleitungen 3, 4 aufgebrachte HF-Signale nach Auskopplung durch den Übertrager 11 ggf. verstärkt und/oder filtert und an die Datenschnittstelleneinheit 15 überträgt.

Bei der in Fig. 1 dargestellten PV-Anlage ist sowohl der wechselrichternahe Transceiver 10c als auch die generatornahen Transceiver 10a, 10b für einen Sende- und Empfangsbetrieb ausgelegt. Eine solche Anordnung ermöglicht daher eine bidirektionale Kommunikation sowohl von den generatornahen Transceivern 10a, 10b in Richtung des wechselrichternahen Transceivers 10c als auch umgekehrt. Wie oben bereits beschrieben, ist das Verfahren jedoch nicht auf eine bidirektionale Kommunikation beschränkt. Es ist daher im Rahmen der Erfindung auch auf eine unidirektionale Kommunikation bspw. von einer wechselrichternahen Sendeeinheit (Transceivers 10c) in Richtung generatornaher Empfangseinheiten (Transceiver 10a, 10b) anwendbar. Auch in diesem Fall sind die zum Signalempfang vorgesehenen Transceiver 10a, 10b neben der Auskopplung und Auswertung der an sie gesendeten HF-Signale jedoch auch in der Lage, ein Hochfrequenz-Testsignal mit vorgegebener Spannungsamplitude u_{TXa} in Richtung der Sendeeinheit zu senden. Der Sendebetrieb beschränkt sich dann jedoch nur auf das Senden des HF-Testsignals vorgegebener Spannungsamplitude. Insbesondere beinhaltet das HF-Testsignal neben einer eventuell vorhandenen Codierung - z. B. aus welchem String bzw. aus welcher Empfangseinheit das Testsignal gesendet wurde und/oder eine Identifikation des Signales als HF-Testsignal - ansonsten keine weitergehende Dateninformation. Im Falle einer unidirektional ausgelegten Kommunikation können somit die Empfangseinheiten aufgrund geringerer Anforderungen an deren Funktionalität relativ zu den Transceivern einer bidirektionalen Kommunikation kostengünstiger ausgeführt werden.

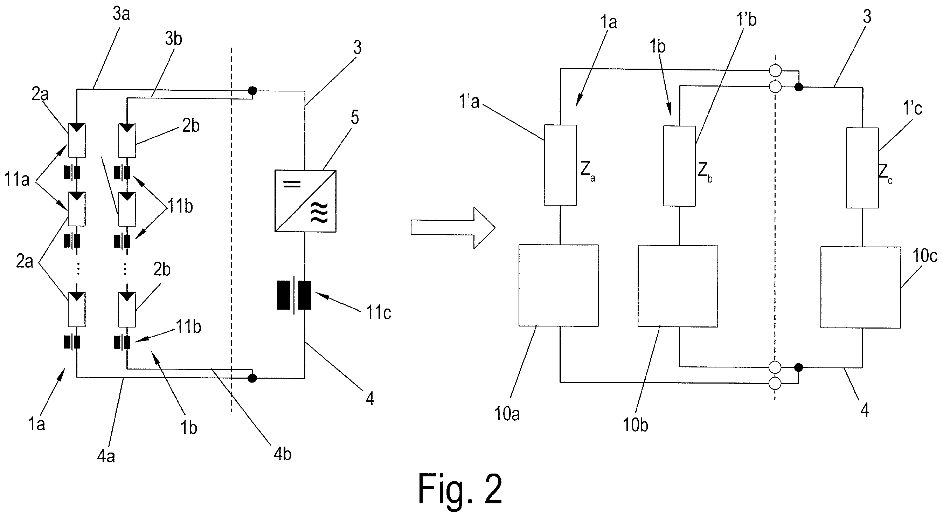

Im Folgenden wird zur detaillierteren Darstellung des erfindungsgemäßen Verfahrens zum Übertragen von Daten über Gleichstromleitungen zur Energieübertragung von einem abstrahierten Ersatzschaltbild einer PV-Anlage, beispielsweise der PV-Anlage der Fig.1, ausgegangen. Die vorgenommene Abstraktion ist anhand von Fig. 2 erläutert. Im linken Teil der Fig. 2 ist eine PV-Anlage mit zwei Strings 1a, 1b und einem Wechselrichter 5 in einem Blockschaltbild dargestellt. Im Unterschied zu dem Ausführungsbeispiel der Fig. 1 sind vorliegend in jedem String eine Mehrzahl von Photovoltaikmodulen 2a bzw. 2b dargestellt, die serienverschaltet sind. Jedem der Photovoltaikmodule 2a bzw. 2b ist ein Transceiver 10a, 10b zugeordnet, der hier in dem linken Teil der Fig. 2 durch einen Übertrager 11a bzw. 11b dargestellt ist. In Reihenverschaltung mit dem Wechselrichter 5 ist ein wechselrichternaher Transceiver 10c angeordnet, der durch seinen Übertrager 11c dargestellt ist.

In einer weiteren Abstraktion, die auf der rechten Seite der Fig. 2 wiedergegeben ist, ist jeweils nur ein Transceiver 10a, 10b in jedem der Strings 1a, 1b wiedergegeben. Sämtliche anderen Komponenten sind in Form einer Ersatzimpedanz 1'a bzw. 1'b zusammengefasst. Der Wert dieser Ersatzimpedanz 1'a bzw. 1'b beträgt Zₐ bzw. Z_{b}. Auf der generatorfernen Seite ist in analoger Weise die in diesem Abschnitt des Gleichstromkreises neben dem Transceiver 10c vorliegende Impedanz, die im Wesentlichen durch den Wechselrichter 5 und die Induktivität der gemeinsam genutzten Gleichstromleitungen 3, 4 gegeben ist, als Ersatzimpedanz 1'c mit dem Impedanzwert Z_{c} zusammengefasst.

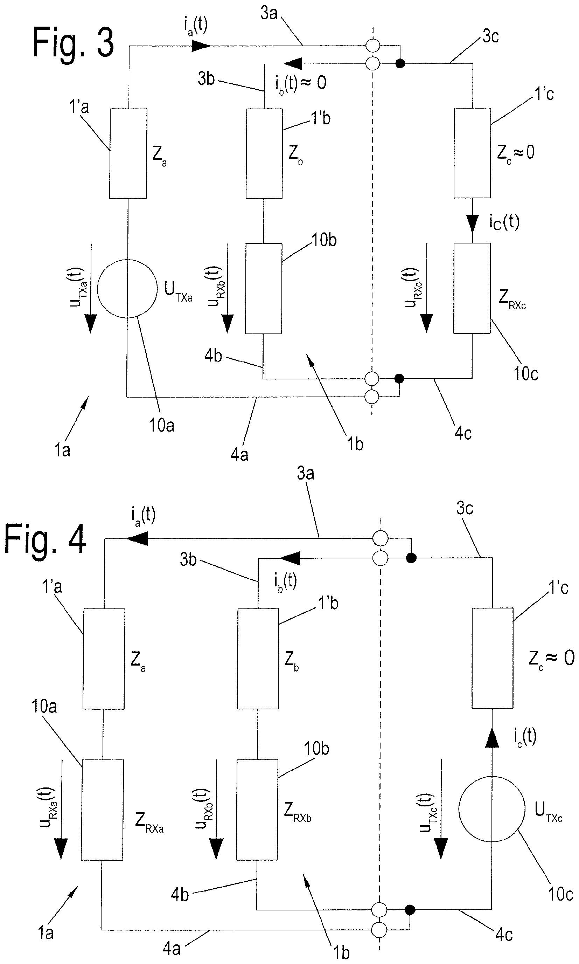

Das erfindungsgemäße Verfahren zur Übertragung von Daten über die Gleichstromleitungen 3, 4 betrifft zum einen eine Übertragung von einem der Transceiver 10a oder 10b zum Transceiver 10c als Empfänger, sowie eine Übertragung vom Transceiver 10c als Sender zu einem der Transceiver 10a, 10b als Empfänger innerhalb einem der Strings 1a, 1b. Diese beiden Situationen sind in den Fig. 3 und 4 jeweils nochmals dargestellt. Wie bereits erwähnt, kann dabei eine unidirektionale oder eine bidirektionale Datenübertragung vorgesehen sein.

Fig. 3 zeigt eine Übertragung von Signalen von dem Transceiver 10a, also von einem der Transceiver innerhalb des Strings 1a, zu dem wechselrichternahen Transceiver 10c. In der Fig. 3 ist der Transceiver 10a daher durch das Symbol einer Wechselspannungsquelle dargestellt, die an ihrem Ausgang eine Wechselspannung u_{TXa}(t) der Amplitude u_{TXa} bereitstellt. Diese vom Transceiver 10a eingekoppelte Wechselspannungsamplitude führt zu einem ebenfalls zeitabhängigen Wechselstrom iₐ(t) der Stromamplitude i_{a,} deren Höhe von der Spannungsamplitude u_{TXa} sowie der Summe der Impedanzen des Transceivers 10a und der übrigen String-Impedanz Zₐ abhängt. Gleichfalls hängt die Höhe der Stromamplitude iₐ auch von der gesamten Impedanz innerhalb des Strings 1b - dargestellt durch die Ersatzimpedanz Z_{b} und die Impedanz der Transceivers Z_{RXb} - als auch von den Impedanzen Z_{c} und Z_{RXc} in dem Zweig des Wechselrichters 5 ab.

Die gestrichelt dargestellte Linie in Fig. 3 und Fig. 3 kennzeichnet in den entsprechenden Ausführungsbeispielen die Grenze des Wechselrichtergehäuses und veranschaulicht so den Anschluss der einzelnen Strings 1a, 1b an den Wechselrichter 5. Exemplarisch sind hier alle Komponenten rechts von der gestrichelten Linie im Wechselrichtergehäuse untergebracht, während alle Komponenten linksseitig der gestrichelten Linie sich außerhalb des Wechselrichtergehäuses befinden. Die eigentliche Parallelschaltung der einzelnen Strings 1a, 1b erfolgt hier innerhalb des Wechselrichtergehäuses. Dies ist jedoch nur eine mögliche Alternative der Parallelschaltung beider Strings 1a, 1b. Alternativ ist es möglich, dass die Parallelschaltung beider Strings 1a, 1b außerhalb des Wechselrichtergehäuses, beispielsweise generatornah, erfolgt. An dem Verbindungspunkt der Gleichstromleitungen 3a, 3b bzw. 4a bzw. 4b mit den Gleichstromleitungen 3c bzw. 4c teilt sich der so im String 1a erzeugte HF-Wechselstrom gemäß der Kirchhoff'schen Regel in Teilströme im String 1b und im Wechselrichterzweig auf. Unter der realistischen Annahme, dass die Impedanz Z_{c} des Wechselrichters sehr viel kleiner ist als die Impedanz Z_{b} im String 1b, ist der Strom i_{b}(t) durch den String 1b vernachlässigbar klein gegenüber dem Strom i_{c}(t) durch den Wechselrichterzweig. Für diesen Strom gilt somit i_{c}(t) ≈ iₐ(t).

Bei einem erfindungsgemäßen Verfahren zum Übertragen von Daten über die Gleichstromleitungen 3, 4 ist vorgesehen, von einem der Transceiver, hier dem Transceiver 10a ein Testsignal mit bekannter Spannungsamplitude u_{TXa} abzugeben. In Abhängigkeit der aktuell vorliegenden Impedanzen innerhalb der Gleichstromzweige stellen sich somit Stromsignale iₐ(t), i_{b}(t), i_{c}(t) in den einzelnen Gleichstromzweigen ein. Im Wechselrichterzweig wird das Stromsignal i_{c}(t) vom Transceiver 10c empfangen und führt dort unter Berücksichtigung der Impedanz Z_{RXc} des Transceivers 10c zu einem Spannungsabfall u_{RXc} (t) = i_{c}(t) * Z_{RXc} , dessen Amplitude u_{RXc} gemessen wird. Unter der soeben motivierten Annahme, dass i_{c}(t) ≈ iₐ(t) ist, und unter der Annahme, dass die Impedanzen der Transceiver 10a, 10b und 10c im Sende- wie im Empfangsfall gleich, zumindest jedoch bekannt sind, kann nun auf Seiten des Transceivers 10c die Impedanz Zₐ aus der bekannten Sendeamplitude u_{TXa} sowie der gemessenen Empfangsamplitude u_{RXC} bestimmt werden.

Wenn in einen nächsten Schritt der Transceiver 10c als Sender fungiert und ein Signal an den Transceiver 10a im String 1a sendet, kann die aus dem Testsignal des Transceivers 10a gewonnene Information über die String-Impedanz Za vom Transceiver 10c als Sender benutzt werden, um eine vorgegebene, gewünschte Signalstärke am Transceiver 10a einzustellen. Die Situation, in der der Transceiver 10c als Sender fungiert, ist in Fig. 4 dargestellt. Wiederum wird davon ausgegangen, dass die Impedanz Z_{c} des Wechselrichters 5 vernachlässigbar klein ist. Um einen gewünschten Strom der Amplitude iₐ im String 1a zu erzeugen, muss vom Transceiver 10c eine Amplitude u_{TXc}=iₐ * (Z_{RXa}+Zₐ) eingestellt werden. Diese Spannung steht aufgrund der vernachlässigbar angenommenen Impedanz Z_{c} ebenfalls an dem Verbindungspunkt der Gleichstromleitungen 3a, 3b bzw. 4a bzw. 4b mit den Gleichstromleitungen 3c bzw. 4c an. Entsprechend kann analog zu Fig. 3 bei einem vom String 1b abgegebenen Testsignal vom Transceiver 10c die String-Impedanz Z_{b} ermittelt werden. Soll ein Signal vom Transceiver 10c als Sender an den Transceiver 10b im String 1b gesendet werden, kann entsprechend eine dafür nötige Spannung vom Transceiver 10c eingestellt werden.

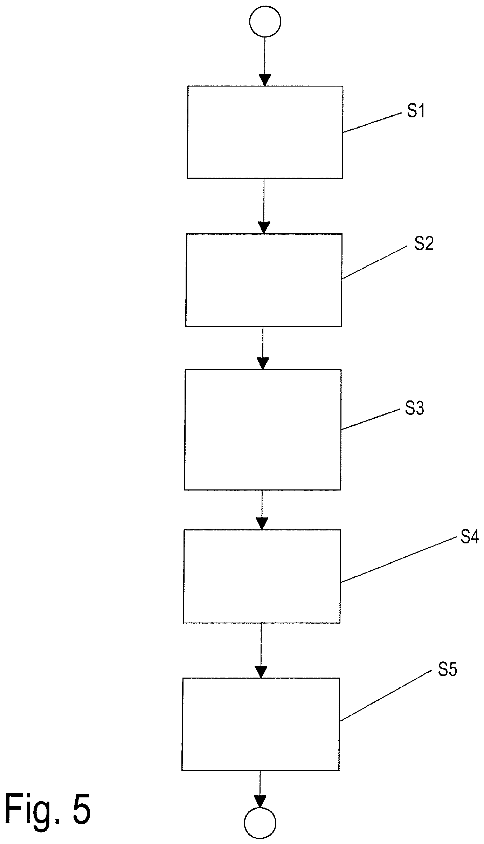

In Fig. 5 ist ein Ausführungsbeispiel eines erfindungsgemäßen Verfahrens zur Übertragung von Daten über Gleichstromleitungen nochmals in Form eines Flussdiagramms wiedergegeben. Das Verfahren kann beispielsweise von einer PV-Anlage wie in Fig. 1 oder Fig. 2 dargestellt durchgeführt werden. Benutzte Bezugszeichen beziehen sich daher beispielhaft auf ein Ausführungsbeispiel gemäß Fig. 1 oder Fig. 2.

In einem ersten Schritt S1 sendet einer der Transceiver 10a aus einem der Strings, hier beispielhaft aus dem String 1a, ein Hochfrequenztestsignal mit definierter Amplitude u_{TXa}. Das Aussenden dieses Testsignals kann wiederholt, beispielsweise regelmäßig erfolgen. Das Testsignal kann in Form eines Datensignals ausgesendet werden, wobei in diese Daten eine Kennung des aussendenden Transceivers 10a codiert enthalten ist. Das Eincodieren der Information kann über bekannte Verfahren mittels einer Amplituden-, einer Phasen-, und/oder einer Frequenzmodulation erfolgen. Neben der Kennung des Transceivers 10a kann codiert enthalten sein, dass es sich bei dem ausgesendeten Signal um ein Testsignal handelt. Die Signalamplitude u_{TXa} kann dabei fest vorgegeben und den Empfängern im System bekannt sein. Es ist auch möglich, dass die Größe der Signalamplitude u_{TXa} in dem Testsignal selbst codiert mit gesendet wird. In einem solchen Fall kann die Signalamplitude u_{TXa} auch variiert werden, beispielsweise bei jeder Wiederholung des Aussendens ansteigen, falls keine Rückmeldung von einem anderen der Transceiver (z.B. dem Transceiver 10c im später folgenden Schritt S4) an den Transceiver 10a erfolgt.

In einem nächsten Schritt S2 empfängt der wechselrichternahe Transceiver 10c eine mit dem Testsignal verbundene hochfrequente Stromamplitude i_{c}.

In einem dritten Schritt S3 berechnet der Transceiver 10c bzw. eine mit ihm verbundene Steuereinheit aus der bekannten Sendeamplitude des Testsignals u_{TXa} und der empfangenen Stromamplitude i_{c} eine benötigte Sendeamplitude u_{TXc}, um seinerseits Daten an den Transceiver 10a im String 1a zu senden. Zur Berechnung dieser individuellen Sendeamplitude u_{TXc} wird zum einen davon ausgegangen, dass der vom Transceiver 10c empfangene Strom i_{c}(t) in seiner Amplitude dem Sendestrom iₐ(t) des Testsignals im String 1a entspricht. Mit bekannter Impedanz der Transceiver 10a und 10c und der Annahme, dass der Wechselrichter 5 eine vernachlässigbar kleine Impedanz Z_{c} aufweist, kann aus der empfangenen Stromamplitude i_{c} und der bekannten Sendeamplitude des Testsignals u_{TXa} die Impedanz Zₐ im String 1a bestimmt werden, anhand derer sich wiederum die individuelle Sendeamplitude u_{TXc} ermitteln lässt.

In einem Schritt S4 sendet der wechselrichternahe Transceiver 10c mit der berechneten Sendeamplitude u_{TXc} Daten an den Transceiver 10a.

Diese im Schritt S4 gesendeten Daten werden im Schritt S5 mit definierter gewünschter Stromamplitude iₐ vom Transceiver 10a im String 1a empfangen.

Das dargestellte Verfahren wird für Datenübertragungen vom Transceiver 10c an den weiteren String 1b oder an sonstige weitere Strings der PV-Anlage mit entsprechend ebenfalls über Testsignale bestimmte individuelle Sendeamplituden u_{TXc} für den Transceiver 10b oder weitere Transceiver wiederholt.

In einer alternativen Ausgestaltung des Verfahrens ist vorgesehen, dass ein vom Transceiver 10a oder 10b innerhalb der Strings 1a, 1b abgegebenes Testsignal zu einer Stromamplitude iₐ bzw. i_{b} innerhalb des Strings 1a, 1b führt, wobei die Stromamplitude iₐ bzw. i_{b} von dem das Testsignal abgebenden Transceiver 10a, 10b selbst gemessen wird. Unter der Voraussetzung, dass die Impedanz Z_{c} - die sich aus der Impedanz des Wechselrichters 5 und der Impedanz der gemeinsam genutzten wechselrichternahen Gleichstromleitungen 3, 4 zusammensetzt, vernachlässigbar klein ist, kann die Impedanz Zₐ bzw. Z_{b} des jeweiligen Strings 1a, 1b vom Transceiver 10a, 10b bestimmt werden.

Bei einem nachfolgenden Sendevorgang von Daten von dem Transceiver 10a, 10b an den wechselrichternahen Transceiver 10c kann entsprechend mit der Kenntnis der Impedanz Zₐ bzw. Z_{b} eine Sendeamplitude u_{TXa} bzw. u_{TXb} so berechnet werden, dass im Wechselrichterzweig eine gewünschte Stromamplitude i_{c} resultiert und somit am Transceiver 10c eine gewünschte Empfangsamplitude u_{RXc} = i_{c} * Z_{RXc} detektiert wird.

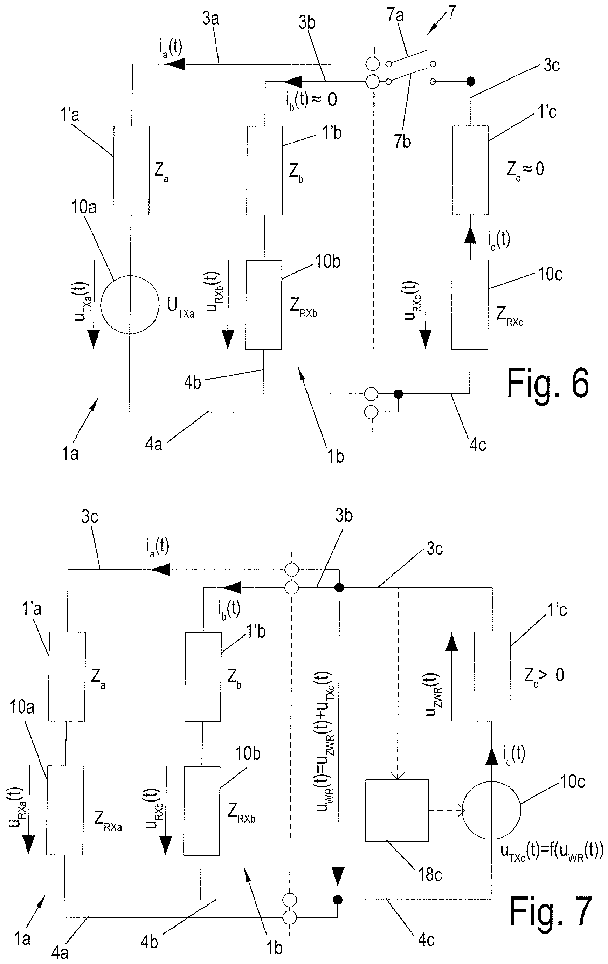

Fig. 6 zeigt ein weiteres Ausführungsbeispiel für ein erfindungsgemäßes Verfahren und eine erfindungsgemäße Vorrichtung zur Übertragung von Daten über Gleichstromleitungen. Bei diesem Ausführungsbeispiel ist ein Schaltorgan 7 vorgesehen, das ein gesteuertes Abtrennen bzw. Zuschalten der einzelnen Strings 1a, 1b ermöglicht. Dazu sind getrennt ansteuerbare Schalter 7a bzw. 7b in den Gleichstromleitungen 3a, 3b angeordnet. Wenn jeweils alle bis auf einen String 1a, 1b abgetrennt sind, kann der Transceiver 10c seinerseits ein Testsignal bekannter Amplitude aussenden und die Amplitude eines dadurch hervorgerufenen Stroms i_{c} bestimmen. So kann alternativ zu den Schritten S1 und S2 ein Wertepaar von Spannungs- und Stromamplitude ermittelt werden, aus dem die jeweilige Impedanz Zₐ bzw. Z_{b} ermittelt werden kann. Für einen nachfolgenden Sendeprozess von Daten von dem wechselrichternahen Transceiver 10c an den Transceiver 10a bzw. 10b kann entsprechend wiederum individuell eine Sendeamplitude u_{TXc} bestimmt und eingestellt werden.

Fig. 7 zeigt ein weiteres Ausführungsbeispiel für ein erfindungsgemäßes Verfahren und eine erfindungsgemäße Vorrichtung zur Übertragung von Daten über Gleichstromleitungen. In der Fig. 7 ist in vergleichbarer Weise wie in Fig. 4 ein Sendevorgang eines wechselrichternahen Transceivers 10c dargestellt. Bei dem Ausführungsbeispiel der Fig. 7 wird davon ausgegangen, dass die Impedanz Z_{c}, die sich aus der Impedanz des Wechselrichters 5 und der Impedanz der gemeinsam genutzten Gleichstromleitungen 3, 4 zusammensetzt, nicht vernachlässigbar klein ist. Um beim Sendevorgang dennoch einen definierten Strom in einem der Strings 1a oder 1b hervorzurufen, auch wenn ein nicht bekannter Spannungsabfall der Amplitude u_{c} über dem Wechselrichter 5 und den gemeinsam genutzten Gleichstromleitungen 3, 4, also der Impedanz Zc abfällt, wird beim Sendevorgang die gewünschte Sendeamplitude u_{TXc} nicht am Übertrager 11c eingestellt, sondern an der Serienverschaltung von Übertrager 11c und der dem Wechselrichterzweig zugeordneten Ersatzimpedanz Z_{c}. Damit ist gewährleistet, dass die gewünschte Spannung u_{TXc} an dem Verzweigungspunkt vom Wechselrichterzweig zu den einzelnen Strings 1a, 1b vorliegt.

Auch in Fig. 7 markiert die gestrichelte Linie die Grenze des Wechselrichtergehäuses und veranschaulicht den Anschluss der einzelnen Strings an den Wechselrichter. Alle Komponenten rechts von der gestrichelten Linie sind im Wechselrichtergehäuse lokalisiert, während alle Komponenten linksseitig der gestrichelten Linie sich außerhalb des Wechselrichtergehäuses befinden. Um zu gewährleisten, dass die gewünschte Spannung u_{TXc} an dem Verzweigungspunkt der gemeinsam genutzten Gleichstromleitungen 3, 4 zu den einzelnen Strings 1a, 1b anliegt, kann vorgesehen sein, die an der Serienschaltung des Übertragers 11c und der dem Wechselrichterzweig zugeordneten Ersatzimpedanz Z_{c} vorliegende Hochfrequenzspannung zu messen und die am Übertrager 11c eingekoppelte Spannung so zu wählen, dass die gemessene Spannung der gewünschten Sendespannung u_{TXc} entspricht. Zu diesem Zweck ist wechselrichterseitig der Regelkreis 18c als Teil des Transceivers 10c vorgesehen.

### Bezugszeichenliste

- 1: String
- 1'a, 1'b, 1'c: Ersatzimpedanz
- 2: PV-Modul
- 2C: Kondensator
- 2L: Induktivität
- 2R: Reihenwiderstand
- 3: Gleichstromleitung
- 3L: Induktivität
- 4: Gleichstromleitung
- 4L: Induktivität
- 5: Wechselrichter
- 6: Energieversorgungsnetz
- 7: Schalter
- 10: Kommunikationseinheit (Transceiver)
- 11: Übertrager
- 12: Wicklung
- 13: Ansteuer- und Auswerteschaltung
- 14: Signalgenerator
- 15: Datenschnittstelleneinheit
- 16: Steuereinrichtung
- 17: Strom-Messmittel
- 18: Regelkreis

- D: Daten

- S1 bis S6: Verfahrensschritt

## Patentansprüche

1. Verfahren zur Übertragung von Daten über Gleichstromleitungen (3, 4) zur Energieübertragung von einer ersten zu einer zweiten Kommunikationseinheit (10a, 10b, 10c) in einer Photovoltaikanlage mit einem PV-Generator, wobei der PV-Generator mindestens einen String (1a, 1b) aufweist, der über die Gleichstromleitungen (3, 4) mit einem Wechselrichter (5) verbunden ist, und wobei dem Wechselrichter (5) und dem mindestens einen String (1a, 1b) jeweils mindestens eine der ersten und zweiten Kommunikationseinheiten (10a, 10b, 10c) zugeordnet ist, mit den folgenden Schritten:
- Erzeugung eines Hochfrequenz-Testsignals mit vorgegebener Spannungsamplitude (u_{TXa}, u_{TXc}) durch die zweite Kommunikationseinheit (10a, 10b, 10c) und Einkoppeln des Hochfrequenz-Testsignals auf die Gleichstromleitungen (3, 4);
- Ermitteln einer Höhe eines auf den Gleichstromleitungen (3, 4) von dem Hochfrequenz-Testsignal hervorgerufenen Stroms (iₐ, i_{b}, i_{c}) durch die erste Kommunikationseinheit (10a, 10b, 10c);
- Bestimmen einer Spannungsamplitude für ein Hochfrequenzsignal zur Übertragung von Daten abhängig von der Höhe des von dem Testsignal hervorgerufenen Stroms (iₐ, i_{b}, i_{c}),
**dadurch gekennzeichnet, dass**
- zum Bestimmen der Spannungsamplitude für das Hochfrequenzsignal zur Übertragung von Daten aus dem von dem Testsignal hervorgerufenen Strom (iₐ, i_{b}, i_{c}) und der vorgegebenen Spannungsamplitude (u_{TXa}, u_{TXc}) des Testsignals eine Impedanz einer Übertragungsstrecke für das Hochfrequenzsignal auf den Gleichstromleitungen (3, 4) mit bekannter Impedanz der Kommunikationseinheiten (10a, 10b, 10c) und unter der Annahme, dass der Wechselrichter (5) eine vernachlässigbar kleine Impedanz aufweist, berechnet wird, und
- ein Einkoppeln eines Hochfrequenzsignals mit der zuvor bestimmten Spannungsamplitude für das Hochfrequenzsignal zur Übertragung von Daten auf die Gleichstromleitungen (3, 4) durch die erste Kommunikationseinheit (10a, 10b, 10c) zur Übertragung von Daten an die zweite Kommunikationseinheit (10a, 10b, 10c) erfolgt.

2. Verfahren nach Anspruch 1, bei dem das Testsignal wiederholt von der zweiten Kommunikationseinheit (10a, 10b, 10c) auf die Gleichstromleitungen (3, 4) eingekoppelt wird.

3. Verfahren nach Anspruch 2, bei dem das Testsignal zyklisch wiederholt eingekoppelt wird.

4. Verfahren nach einem der Ansprüche 1 bis 3, bei dem das Testsignal mit einer fest vorgegebenen Spannungsamplitude (u_{TXa}, u_{TXc}) eingekoppelt wird.

5. Verfahren nach Anspruch 2 oder 3, bei dem die vorgegebene Spannungsamplitude (u_{TXa}, u_{TXc}) von der das Testsignal aussendenden zweiten Kommunikationseinheit (10a, 10b, 10c) variiert wird.

6. Verfahren nach einem der Ansprüche 1 bis 5, bei dem das Testsignal mit eincodierten Informationen ausgesendet wird, wobei die Informationen eine Kennung der das Testsignal aussendenden zweiten Kommunikationseinheit (10a, 10b, 10c) und/oder eine Angabe der Höhe der vorgegebenen Spannungsamplitude (U_{TXa}, u_{TXc}) umfassen.

7. System zur Übertragung von Daten über Gleichstromleitungen (3, 4) zur Energieübertragung, aufweisend mindestens eine erste und eine zweite Kommunikationseinheit (10a, 10b, 10c), wobei das System in einer Photovoltaikanlage mit einem PV-Generator angeordnet ist, wobei der PV-Generator mindestens einen String (1a, 1b) aufweist, der über die Gleichstromleitungen (3, 4) mit einem Wechselrichter (5) verbunden ist, wobei dem Wechselrichter (5) und dem mindestens einen String (1a, 1b) jeweils mindestens eine der ersten und zweiten Kommunikationseinheiten (10a, 10b, 10c) zugeordnet ist, wobei jede der Kommunikationseinheiten (10a, 10b, 10c)
- ein Einkoppelmittel zur Einkopplung von Hochfrequenzsignalen auf die Gleichstromleitungen (3, 4) und
- ein Auskoppelmittel zur Auskopplung von Hochfrequenzsignalen von den Gleichstromleitungen (3, 4)
aufweist,
- wobei die zweite Kommunikationseinheit (10a, 10b, 10c) einen Testsignalgenerator zur Erzeugung eines Hochfrequenz-Testsignals mit vorgegebener Spannungsamplitude (U_{TXa}, u_{TXc}) aufweist,
- wobei die erste Kommunikationseinheit (10a, 10b, 10c) Strom-Messmittel (17c) zur Bestimmung einer Höhe eines auf den Gleichstromleitungen (3, 4) von dem Testsignal hervorgerufenen Stroms (iₐ, i_{b}, i_{c}) aufweist und
- wobei die erste Kommunikationseinheit (10a, 10b, 10c) einen Signalgenerator (14c) zur Erzeugung eines Hochfrequenzsignals mit variabler Spannungsamplitude zur Übertragung von Daten an die zweite Kommunikationseinheit (10a, 10b, 10c) aufweist, sowie eine Steuereinrichtung (16c) zur Einstellung der variablen Spannungsamplitude des Hochfrequenzsignals abhängig von der Höhe des von dem Testsignal hervorgerufenen Stroms (iₐ, i_{b}, i_{c}),
**dadurch gekennzeichnet, dass** das System mit derartig ausgebildeten Kommunikationseinheiten zur Durchführung des Verfahrens nach einem der Ansprüche 1 bis 6 geeignet ist.

8. System nach Anspruch 7, bei dem die Einkoppelmittel und/oder die Auskoppelmittel der Kommunikationseinheiten (10a, 10b, 10c) galvanisch trennende Übertrager (11a, 11b, 11c) mit mindestens zwei Wicklungen (12a, 12b, 12c) aufweisen, von denen jeweils eine in eine der Gleichstromleitungen (3, 4) eingeschleift ist.

9. System nach Anspruch 7 oder 8, wobei die Photovoltaikanlage mindestens zwei parallel geschaltete Strings (1a, 1b) aufweist, wobei jedem der Strings (1a, 1b) eine erste oder zweite Kommunikationseinheit (10a, 10b, 10c) zugeordnet ist.

10. System nach einem der Ansprüche 7 bis 9, wobei dem Wechselrichter (5) die erste Kommunikationseinheit (10a, 10b, 10c) und dem mindestens einem String (1a, 1b) die zweite Kommunikationseinheit (10a, 10b, 10c) zugeordnet ist.

11. Photovoltaikanlage mit einem PV-Generator, der mindestens einen String (1a, 1b) aufweist, der über Gleichstromleitungen (3, 4) mit einem Wechselrichter (5) verbunden ist, mit einem System zur Übertragung von Daten über die Gleichstromleitungen (3, 4) nach einem der Ansprüche 7 bis 10.

## Claims

1. A method for transmitting data via direct current lines (3, 4) for energy transmission from a first communication unit to a second communication unit (10a, 10b, 10c) in a photovoltaic installation with a PV-generator, wherein the PV-generator comprises at least one string (1a, 1b) electrically connected to an inverter (5) via the direct current lines (3, 4), and wherein the inverter (5) and the at least one string (1a, 1b) each are associated with one of the first and second communication units (10a, 10b, 10c), comprising the following steps:
- generation of a high-frequency test signal having a predefined voltage amplitude (u_{TXa}, u_{TXc}) by the second communication unit (10a, 10b, 10c) and coupling the high-frequency test signal onto the direct current lines (3, 4);
- determination of a level of a current (iₐ, i_{b}, i_{c}) caused by the high-frequency test signal on the direct current lines (3, 4) by the first communication unit (10a, 10b, 10c);
- determination of a voltage amplitude for a high-frequency signal for data transmission dependent on the level of the current (iₐ, i_{b}, i_{c}) caused by the test signal,
**characterized in that**
- for determining the voltage amplitude for the high-frequency signal for data transmission from the current (iₐ, i_{b}, i_{c}) caused by the test signal and the predetermined voltage amplitude (u_{TXa}, u_{TXc}) of the test signal, an impedance of a transmission path for the high-frequency signal on the direct-current lines (3, 4) is calculated with a known impedance of the communication units (10a, 10b, 10c) and assuming that the inverter (5) has a negligibly small impedance, and
- a high-frequency signal with the previously determined voltage amplitude of the high frequency signal for data transmission is coupled onto the direct current lines (3, 4) by the first communication unit (10a, 10b, 10c) for data transmission to the second communication unit (10a, 10b, 10c).

2. The method as claimed in claim 1, wherein the test signal is repeatedly coupled onto the direct current lines (3, 4) by the second communication unit (10a, 10b, 10c).

3. The method as claimed in claim 2, wherein the test signal is coupled in in a cyclically repeated manner.

4. The method as claimed in one of claims 1 to 3, wherein the test signal is coupled in with a firmly predefined voltage amplitude (U_{TXa}, u_{TXc}).

5. The method as claimed in claim 2 or 3, wherein the voltage amplitude (U_{TXa}, u_{TXc}) is varied by the second communication unit (10a, 10b, 10c) which emits the test signal.

6. The method as claimed in one of claims 1 to 5, wherein the test signal is emitted with encoded information, wherein the information comprises an identifier of the second communication unit (10a, 10b, 10c) which emits the test signal and/or an indication of the level of the voltage amplitude (u_{TXa}, u_{TXc}).

7. A system for transmitting data via direct current lines (3, 4) for energy transmission, comprising at least one first and one second communication unit (10a, 10b, 10c), wherein the system is arranged in a photovoltaic installation with a PV-generator, wherein the PV-generator comprises at least one string (1a, 1b) electrically connected to an inverter (5) via the direct current lines (3, 4), and wherein the inverter (5) and the at least one string (1a, 1b) each are associated with one of the first and second communication units (10a, 10b, 10c), wherein each of the communication units comprising
- a coupling-in means for coupling high-frequency signals onto the direct current lines (3, 4) and
- a coupling-out means for coupling out high-frequency signals from the direct current lines (3, 4),
- wherein the second communication unit (10a, 10b, 10c) comprises a test signal generator for generating a high-frequency test signal with a predefined voltage amplitude (u_{TXa}, u_{TXc}),
- wherein the first communication unit (10a, 10b, 10c) comprises current measuring means (17c) for determining a level of a current (iₐ, i_{b}, i_{c}) caused by the test signal on the direct current lines (3, 4), and
- wherein the first communication unit (10a, 10b, 10c) comprises a signal generator (14c) for generating a high-frequency signal with a variable voltage amplitude for transmitting data to the second communication unit (10a, 10b, 10c), as well as a control device (16c) for setting the variable voltage amplitude of the high-frequency signal dependent on the level of the current (iₐ, i_{b}, i_{c}) caused by the test signal,
**characterized in that** the system having communication units so formed is adapted to perform the method according to one of claims 1 to 6.

8. The system as claimed in claim 7, wherein the coupling-in means and/or the coupling-out means of the communication units (10a, 10b, 10c) comprise galvanically isolating transformers (11a, 11b, 11c) with at least two windings (12a, 12b, 12c), one of which is respectively looped into one of the direct current lines (3, 4).

9. The system as claimed in claim 7 or 8, wherein the photovoltaic installation comprises at least two strings (1a, 1b) connected in parallel, and wherein a first or a second communication unit (10a, 10b, 10c) being assigned to each of the strings (1a, 1b).

10. The system according to one of claims 7 to 9, wherein the first communication unit (10a, 10b, 10c) is assigned to the inverter (5) and the second communication unit (10a, 10b, 10c) is assigned to the at least one string (1a, 1b).

11. A photovoltaic installation having a PV generator comprising at least one string (1a, 1b) which is connected to an inverter (5) via direct current lines (3, 4), having a system for transmitting data via the direct current lines (3, 4) as claimed in one of claims 7 to 10.

## Revendications

1. Procédé pour transmettre des données par l'intermédiaire de lignes à courant continu (3, 4) destinées à transmettre de l'énergie d'une première à une deuxième unité de communication (10a, 10b, 10c) dans une installation photovoltaïque comportant un générateur PV, dans lequel le générateur PV comporte au moins une chaîne (1a, 1b) qui est reliée à un onduleur (5) par l'intermédiaire des lignes à courant continu (3, 4), et dans lequel au moins l'une des première et deuxième unités de communication (10a, 10b, 10c) est respectivement associée à l'onduleur (5) et à ladite au moins une chaîne (1a, 1b), comportant les étapes suivantes :
- génération par la deuxième unité de communication (10a, 10b, 10c) d'un signal d'essai à haute fréquence ayant une amplitude de tension prédéterminée (U_{TXa}, u_{TXc}) et injection du signal d'essai à haute fréquence dans les lignes à courant continu (3, 4) ;
- détermination par la première unité de communication (10a, 10b, 10c) d'une hauteur d'un courant (iₐ, i_{b}, i_{c}) induit par le signal d'essai à haute fréquence sur les lignes à courant continu (3, 4) ;
- détermination d'une amplitude de tension d'un signal à haute fréquence destiné à transmettre des données en fonction de la hauteur du courant (iₐ, i_{b}, i_{c}) induit par le signal d'essai,
**caractérisé en ce que**
- pour déterminer l'amplitude de tension du signal à haute fréquence destiné à transmettre des données à partir du courant (iₐ, i_{b}, i_{c}) induit par le signal d'essai et l'amplitude de tension prédéterminée (u_{TXa}, u_{TXc}) du signal d'essai, une impédance d'un trajet de transmission du signal à haute fréquence sur les lignes à courant continu (3, 4) est calculée avec une impédance connue des unités de communication (10a, 10b, 10c) et en supposant que l'onduleur (5) présente une impédance négligeable,
et
- une injection d'un signal à haute fréquence présentant l'amplitude de tension précédemment déterminée du signal à haute fréquence destiné à transmettre des données sur les lignes à courant continu (3, 4) est effectuée par la première unité de communication (10a, 10b, 10c) pour transmettre des données à la deuxième unité de communication (10a, 10b, 10c).

2. Procédé selon la revendication 1, dans lequel le signal d'essai est injecté de manière répétée par la deuxième unité de communication (10a, 10b, 10c) sur les lignes à courant continu (3, 4).

3. Procédé selon la revendication 2, dans lequel le signal d'essai est injecté de manière cyclique et répétée.

4. Procédé selon l'une des revendications 1 à 3, dans lequel le signal d'essai est injecté avec une amplitude de tension prédéterminée fixe (u_{TXa}, u_{TXc}) .

5. Procédé selon la revendication 2 ou 3, dans lequel l'amplitude de tension prédéterminée (u_{TXa}, u_{TXc}) est modifiée par la deuxième unité de communication (10a, 10b, 10c) qui émet le signal d'essai.

6. Procédé selon l'une des revendications 1 à 5, dans lequel le signal d'essai est émis avec des informations codées, dans lequel lesdites informations comprennent un identificateur de la deuxième unité de communication (10a, 10b, 10c) émettant le signal d'essai et/ou une indication de la hauteur de l'amplitude de tension prédéterminée (u_{TXa}, u_{TXc}).

7. Système pour transmettre des données par l'intermédiaire de lignes à courant continu (3, 4) destinées à transmettre de l'énergie, comportant au moins une première et une deuxième unité de communication (10a, 10b, 10c, dans lequel le système est disposé dans une installation photovoltaïque comportant un générateur PV, dans lequel le générateur PV comporte au moins une chaîne (1a, 1b) qui est reliée à un onduleur (5) par l'intermédiaire des lignes à courant continu (3, 4), dans lequel au moins l'une des première et deuxième unités de communication (10a, 10b, 10c) est respectivement associée à l'onduleur (5) et à ladite au moins une chaîne (1a, 1b), dans lequel chacune des unités de communication (10a, 10b, 10c) comporte
- un moyen d'injection pour injecter des signaux à haute fréquence sur les lignes à courant continu (3, 4) et
- un moyen de découplage pour découpler les signaux à haute fréquence des lignes à courant continu (3, 4),
- dans lequel la deuxième unité de communication (10a, 10b, 10c) comporte un générateur de signal d'essai pour générer un signal d'essai à haute fréquence présentant une amplitude de tension prédéterminée (u_{TXa}, u_{TXc}),
- dans lequel la première unité de communication (10a, 10b, 10c) comprend des moyens de mesure de courant (17c) pour déterminer une hauteur d'un courant (iₐ, i_{b}, i_{c}) induit sur les lignes à courant continu (3, 4) par le signal d'essai, et
- dans lequel la première unité de communication (10a, 10b, 10c) comporte un générateur de signal (14c) pour générer un signal à haute fréquence présentant une amplitude de tension variable pour transmettre des données à la deuxième unité de communication (10a, 10b, 10c), ainsi qu'un dispositif de commande (16c) pour ajuster l'amplitude de tension variable du signal à haute fréquence en fonction de la hauteur du courant (iₐ, i_{b}, i_{c}) induit par le signal d'essai,
**caractérisé en ce que** le système comportant des unités de communication ainsi réalisées est approprié pour mettre en oeuvre le procédé selon l'une des revendications 1 à 6.

8. Système selon la revendication 7, dans lequel les moyens d'injection et/ou les moyens de découplage des unités de communication (10a, 10b, 10c) comportent des transducteurs à séparation galvanique (11a, 11b, 11c) munis d'au moins deux enroulements (12a, 12b, 12c), dont l'un est connecté sur l'une des lignes à courant continu (3, 4).

9. Système selon la revendication 7 ou 8, dans lequel l'installation photovoltaïque comporte au moins deux chaînes (1a, 1b) connectées en parallèle, dans lequel chacune des chaînes (1a, 1b) est associée à une première ou à une deuxième unité de communication (10a, 10b, 10c).

10. Système selon l'une des revendications 7 à 9, dans lequel la première unité de communication (10a, 10b, 10c) est associée à l'onduleur (5) et la deuxième unité de communication (10a, 10b, 10c) est associée à ladite au moins une chaîne (1a, 1b).

11. Installation photovoltaïque comprenant un générateur PV comportant au moins une chaîne (1a, 1b) qui est reliée à un onduleur (5) par l'intermédiaire de lignes à courant continu (3, 4), qui présente un système pour transmettre des données par l'intermédiaire des lignes à courant continu (3, 4) selon l'une des revendications 7 à 10.
